# EUROPEAN PATENT SPECIFICATION

(11) **EP 0 292 560 B1**
(45) Date of publication and mention of the grant of the patent: **27.01.1993**
(21) Application number: 87901116.1
(22) Date of filing: 02.02.1987
(51) Int. Cl.: G03B 17/14

(54) **APPARATUS FOR KINEMATIC LINKAGE IN INTERCHANGEABLE LENS TYPE OF CAMERA**
GERÄT ZUR KINEMATISCHEN VERBINDUNG IN EINER KAMERA MIT EINEM WECHSELOBJEKTIV
DISPOSITIF DE CHAINE CINEMATIQUE DANS UN APPAREIL PHOTOGRAPHIQUE DU TYPE A OBJECTIFS INTERCHANGEABLES

(30) Priority: 05.02.1986 JP 14483/86; 20.10.1986 JP 160327/86
(43) Date of publication of application: 30.11.1988
(73) Proprietor: ASAHI KOGAKU KOGYO KABUSHIKI KAISHA, Tokyo 174 (JP)
(72) Inventor: KUREI, Hiroshi Asahi Kogaku Kogyo Kabushiki Kaisha, Tokyo 174 (JP); ARAI, Akihiro Asahi Kogaku Kogyo Kabushiki Kaisha, Tokyo 174 (JP); KOBAYASHI, Takumi Asahi Kogaku Kogyo K. K., Tokyo 174 (JP)
(74) Representative: Schaumburg, Thoenes & Thurn
(86) International application number: PCT/JP87/00067
(87) International publication number: WO 87/04807

(56) References cited:
- DE-A- 3 214 124
- DE-A- 3 234 725
- US-A- 4 536 071
- Patent Abstracts of Japan, vol. 8, no. 144, (P-284)(1581), 5 July 1984 & JP A 5942527

## Description

The present invention relates to an interchangeable lens type camera according to the generic part of claim 1. A camera of this kind is described in US-A-4536071.

In a known interchangeable lens type camera having a driving motor for a lens driving mechanism, such as an automatic focusing device or the like in the camera body, a driving shaft for operatively connecting the driven mechanism of the interchangeable lens to the driving motor, and a mount locking member for locking the interchangeable lens in a predetermined locking position are provided on a mount surface of the camera body (which will be referred to as a mounting ring surface hereinafter). The driving shaft and the mount locking member are continuously biased into a projected position in which they project outward from the mounting ring surface and can be retracted from the mounting ring surface. Namely, when a mount surface of the interchangeable lens (which will be referred to as a lens mount surface hereinafter) comes into contact with the mounting ring surface, the driving shaft and the mount locking member are forced into the mounting ring surface by the lens mount surface, so that the outer projecting ends of the driving shaft and the mount locking member are flush with the mounting ring surface. This flush arrangement enables the interchangeable lens to rotate on the mounting ring surface.

When the interchangeable lens is rotated to a predetermined position, the driving shaft and the mount locking member project outward from the mounting ring surface to come into engagement in and with a locking recess formed in the lens mount surface, and a lens driving member (a driven member) of the interchangeable lens, respectively.

When the interchangeable lens is removed from the camera body, a mount lock releasing member is actuated to force the driving shaft and the mount locking member into the mounting ring surface. The lock release can be preferably effected by a single lock releasing member. To this end, the driving shaft and the mount locking member are usually arranged in a same quadrant of the mounting ring surface (in a coordinate having an origin on an optical axis of the lens when viewed from the front of the camera body), in a conventional interchangeable lens type camera.

The arrangement of the driving shaft and the mount locking member in the same quadrant ensures a close location of the driving shaft to the mount locking member, thus resulting in the realization of a simple and compact construction of the driving shaft and the mount locking member, in association with the single mount lock releasing member.

On the other hand, usually, a mode selection switch is provided in a conventional interchangeable lens type camera to select an automatic focusing mode and a manual focusing mode. In addition, in a camera having an automatic focusing device, the automatic focusing mode has usually two modes, i.e. a first mode in which the focusing operation has a priority, which will be referred to as a focusing priority mode hereinafter, and a second mode in which the releasing operation has a priority, which will be referred to as a releasing priority mode. In the manual focusing mode, an operator can manually adjust focusing.

In a camera having the mode selection mechanism as mentioned above, the driving shaft is associated with the mode selection switch, so that the driving shaft is held in a connected position, i.e. a projected position in which the driving shaft projects from the mounting ring surface and is operatively or kinematically connected to the driven member of the lens, in the automatic focusing mode, and is held in a disconnected position, i.e. a retracted position in which the driving shaft is disconnected from the driven member, in the manual focusing mode. The disconnection of the driving shaft from the driving member (distance ring) on the lens contributes to a reduced power of manual operation, in the manual focusing mode.

It is preferable to provide the mode selection switch in a location enabling an operator to actuate the mode selection switch by his or her left hand. This is because operators usually hold the camera body with their right hand and actuate focusing, etc. with their left hand . Preferably, the mode selection switch is arranged on the right side of the camera body, and in particular in the fourth quadrant of a coordinate in the mounting ring surface when viewed from the front of the camera body

On the other hand, the mount lock releasing member is usually located either in the third quadrant (left side) or in the fourth quadrant (right side) of the same coordinate of the camera body, since it is usually not necessary to actuate the mount lock releasing member while taking a photograph. When the mode selection switch is located on the right side (fourth quadrant) of the camera body for reasons mentioned above, the mount lock releasing member is preferably located on the left side (third quadrant), in order to prevent the actuation of the mode selection switch and the actuation of the mount lock releasing member from interfering with each other.

The driving shaft and the mode selection switch should be located close to each other, since when the manual mode is selected by the mode selection switch, the driving shaft is associated with the mode selection switch in such a way that the driving shaft is retracted from the mounting ring surface, as mentioned before. For , if the mode selection switch is located in the fourth quadrant, the driving shaft should also be located in the fourth quadrant.

Under these circumstances, the most preferable arrangement with respect to operability of the elements is that the mount lock releasing member is provided in the third quadrant, and the driving shaft and the mode selection switch are provided in the fourth quadrant.

However, in this most preferable arrangement, a problem is posed by a connecting mechanism between the mount lock releasing member and the driving shaft which is located far from the mount lock releasing member. Namely, the problem to be solved is that a simple and compact connecting mechanism between the movable elements (driving shaft, mount locking member, mount lock releasing member) of the camera is realized in a limited space of the camera with a minimum of transmission loss.

In addition to the foregoing, electrical contacts are usually provided on the mounting ring of the camera to transmit and receive information (various electrical signals) between the camera body and the interchangeable lens, in an interchangeable lens type camera. These contacts are usually located on the lower portion of the mount. The location of the contacts on the lower portion of the mount increases the distance between the mount lock releasing member and the driving shaft, thus bringing about difficulties in the realization of a small and compact arrangement of the connecting mechanism mentioned above.

The primary object of the present invention is, therefore, to provide a simple apparatus for a kinematic linkage between the driving shaft and the mount lock releasing member in an interchangeable lens type camera in which the mount lock releasing member is located in the third quadrant and the driving shaft (and the mode selection switch) is (are) located in the fourth quadrant.

Another object of the present invention is to provide a camera having a small camera body with such an apparatus for kinematic linkage.

In order to achieve the objects mentioned above, according to the present invention, the characterizing features of claim 1 are provided in a camera initially mentioned. Advantageous further developments of the invention are described in the subclaims.

Generally speaking, an area in the vicinity of the camera bottom is a dead area, and accordingly, the kinematic linkage mechanism can be provided on the bottom of the camera body without enlarging the size of the camera body.

According to another aspect of the present invention, a connecting member (second intermediate lever) is provided on the bottom of the camera body, said connecting member, having a movable portion which is associated with the mount lock releasing member in such a way that when the mount lock releasing member is actuated to unlock the lock releasing member, the movable portion moves in a retracting direction of the driving shaft. The displacement of the movable portion of the connecting member is larger than a minimum displacement of the driving shaft, necessary for complete retraction thereof from the mounting ring surface. The difference in displacement between the driving shaft and the movable portion of the connecting member (second intermediate lever) can be absorbed by a resilient member which connects the driving shaft and the movable portion of the connecting member. If the mode selection switch is provided in the fourth quadrant, the elastic member can be provided with a movable portion, associated with the mode selection switch integral therewith, so as to move together with the mode selection switch.
Figs. 1 to 4 show a first embodiment of the present invention, wherein Fig. 1 is a front elevational view of a camera body; Fig. 2 is a front elevational view of the camera body shown in Fig. 1, differing from the latter in that the body mount and outer decorative member have been removed; Fig. 3 is a perspective view of a main part of Fig. 1; and Fig. 4 is a sectional view taken along the line IV-IV in Fig. 3;
Figs. 5 to 7 show another embodiment of the present invention, in which Figs. 5 and 6 are perspective views of a main part of an apparatus for kinematic linkage of the invention, shown in different operational positions; and, Fig. 7 is a sectional view taken along the line VII-VII in Fig. 5; and,
Fig. 8 is a perspective view of an interchangeable lens.

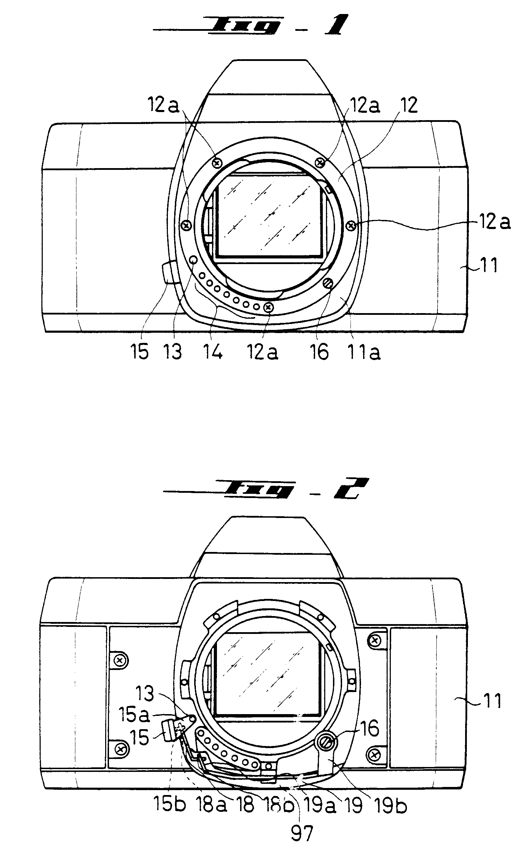

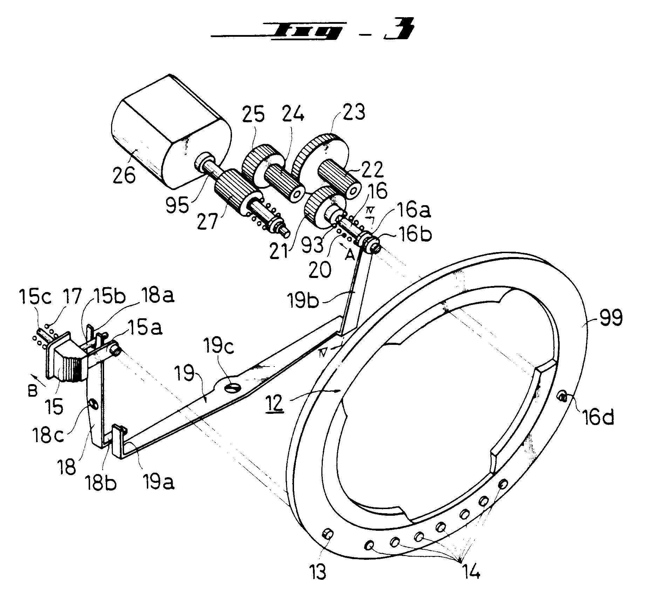

Figs. 1 to 4 show one embodiment of the present invention, in which the invention is applied to an automatic focusing camera without a mode selection switch. Also, in this first embodiment, a driven member on the lens side to be driven by a driving motor incorporated in the camera body is a focus adjusting member, i.e. a lens.

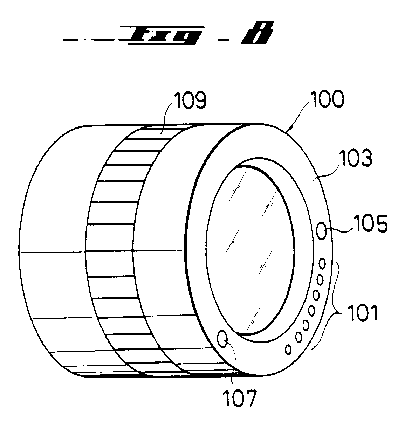

The camera body 11 has a mounting ring 12 which is secured to an outer decorative member 11a of the camera body 11, at the central portion of the camera body, by means of set screws 12a. On the mounting ring 12 are provided a mount locking member 13 which is adapted to lock an interchangeable lens 100 (Fig. 8) in a predetermined locked position in the third quadrant of the body mount when viewed from the front, and electrical contacts 14 which come into contact with electrical contacts 101 (Fig. 8) provided on the interchangeable lens 100 to transmit and receive information concerning, for example, the focal length, the diaphragm value (F value) or the like between the camera body and the lens. The mount locking member and the electrical contacts project outward from the surface 99 of the mounting ring 12. Also, in the third quadrant, the outer decorative member 11a is provided, on its outer side face, with a mount lock releasing member 15 for releasing the lock of the interchangeable lens by the mount locking member 13. The mount lock releasing member 15 can be pushed in a direction parallel to the optical axis of the lens.

On the other hand, AF (Auto Focus) driving shaft 16 is provided in the fourth quadrant of the mounting ring 12 to connect the drive source on the camera body 11 and the lens driving mechanism of the interchangeable lens.

The mount lock releasing member 15 has an arm 15a extending parallel to the mounting ring surface 99. The mount locking member 13 is secured to the arm 15a. The mount lock releasing member 15 has a guide pin 15c integral therewith which can be slidably fitted in the camera body, so that the mount lock releasing member 15 can move in a direction parallel to the optical axis. The mount lock releasing member 15 is continuously biased into a projected position in which the mount locking member 13 is projected from the surface 99 of the mounting ring 12, by means of a compression spring 17. The mount lock releasing member 15 is also provided with an associated pin 15b which extends perpendicular to the mount locking member 13, in rear of the mount locking member 13.

The associated pin 15b of the mount lock releasing member 15 is engaged by a forked actuating arm 18a of a first intermediate lever 18. The first intermediate lever 18 is rotatably connected to a shaft 18c which extends in a horizontal plane parallel to the mount surface. The first intermediate lever 18 extends in a substantially vertical direction, when viewed from front, on the lower side of the mounting ring 12. The first intermediate lever 18 is biased by the compression spring 17, so that its lower end 18b bent into L-shape tends to move rearward. The lower end 18b of the first intermediate lever 18 is associated with a second intermediate lever 19 which is pivoted to a vertical pivot shaft 19c provided on the bottom 97 of the camera body. Namely, the second intermediate lever 19 has, at its opposite ends, bent end arms 19a and 19b which extend upward, so that the lower end arm 18b of the first intermediate lever 18 is engaged by the end arm 19a of the second intermediate lever 19. The engagement between the end arms 18b and 19a allows the transmission of the movement in only one direction. Namely, when the end arm 18b moves (rotates) forward, the movement thereof is transmitted to the end arm 19a of the second intermediate lever 19, so that the latter moves (rotates) forward in the same direction, but when the end arm 19a of the second intermediate lever 19 moves forward, the movement of the second intermediate lever 19 does not cause any movement (rotation) of the first intermediate lever 18.

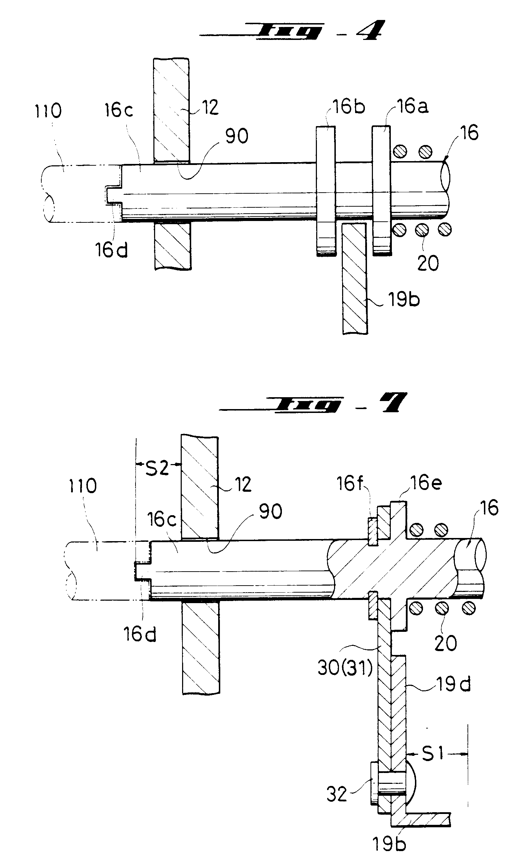

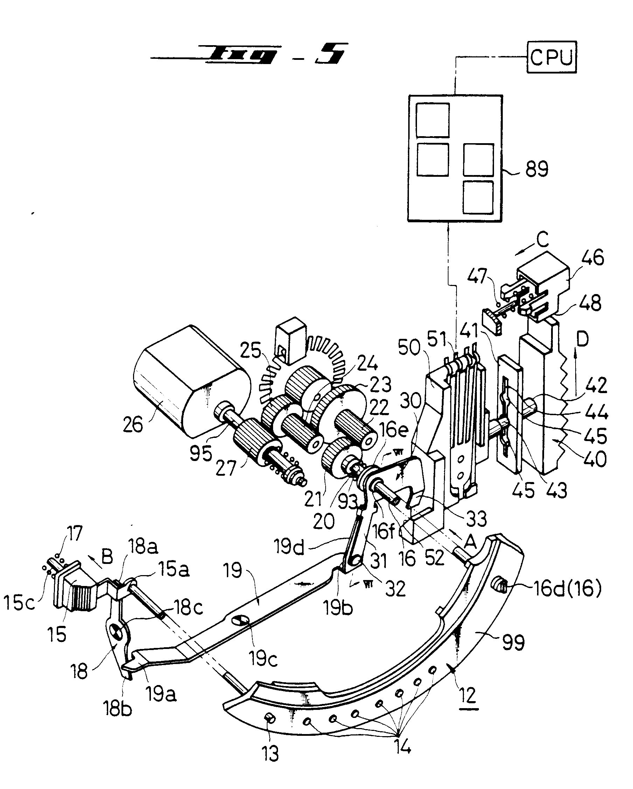

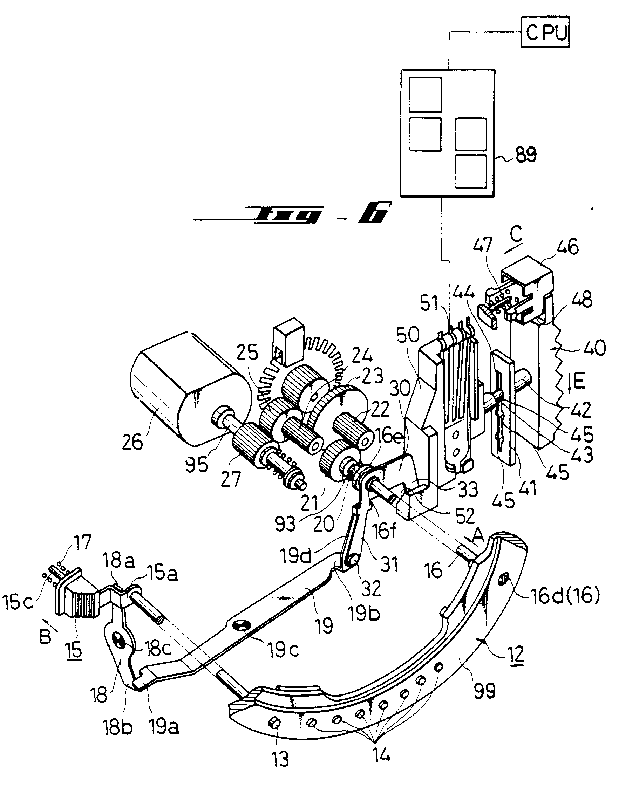

The second intermediate lever 19 is engaged, at its opposite bent end 19b, by the AF driving shaft 16. The AF driving shaft 16 is fitted in a hole 90 (Fig. 4) formed in the mounting ring 12 for rotation and axial movement. The front end 16c of the AF driving shaft 16 has a decreased diameter and can retract and project from the body mounting ring 12. The smaller end 16c has a flat projection 16d on the front end face of the front end 16c, so that the projection 16d can be connected to a connecting portion in the form of a groove of the lens driving member 101 (Figs. 4 and 7) on the interchangeable lens. The AF driving shaft 16 has a pair of flanges 16a and 16b between which the bent end 19b of the arm 19 is inserted, in rear of the body mount 12. The AF driving shaft 16 is biased in a position in which the flange 16b bears against the rear face of the mounting ring 12, by means of a compression spring 20 which is provided around the AF driving shaft 16 on the portion thereof close to the flange 16a. The smaller end 16c then projects from the surface 99 of the mounting ring 12.

The inner (rear) end of the AF driving shaft 16 has a non-circular sectional shape, such as a rectangular or oval shape, and is slidably inserted in an axial hole 93 of a corresponding sectional shape formed in a joint gear 21 which is kinematically connected to a pinion gear 27 secured to a drive shaft 95 of a driving motor 26 which is a drive source of the automatic focusing device, through gears 22, 23, 24 and 25. Thus, the driving shaft 16 can move in axial directions thereof without causing any relative rotation between the shaft 16 and the gear 21. Namely, the shaft 16 rotates together with the gear 21. In an alternative, the shaft 16 can be connected to the gear 21 through a spline connection. In the apparatus for kinematic linkage between the driving shaft and the mount lock releasing lever, as constructed above, an interchangeable lens can be attached to and dismounted from the camera body, as follows.

When an interchangeable lens is mounted to the camera body 11, the mount surfaces of the two mounts (mounting ring 12 and lens mount 103) are aligned, opposed to each other and brought into surface contact with each other, so that the mount locking member 13 and the driving shaft 16 which both project from the surface of the mounting ring 12 can be forced into the mounting ring 12 by the lens mount 103 of the interchangeable lens 100 (Fig. 8) to a retraced position in which the end faces of the driving shaft 16 and the mount locking member 13 are flush with the surface of the mounting ring 12, against the compression springs 17 and 20.

When the mount locking member 13 is forced into the mounting ring 12, the mount lock releasing member 15 integral with the mount locking member is also moved in the same direction, and accordingly, the first intermediate lever 18 rotates about the shaft 18c in the counterclockwise direction in Fig. 3, through the associated pin 15b and the forked end 18a. The rotation of the first intermediate lever 18 causes the forward movement of the bent end 18b thereof. As a result of this movement of the bent end 18b, the second intermediate lever 19 rotates about the pivot shaft 19c so that the bent end 19b thereof moves rearward. The movement of the bent end 19b of the second intermediate lever 19 causes the AF driving shaft 16, associated with the second intermediate lever 19 through the flange 16a, to move in a direction designated by an arrow A in Fig. 3, against the compression spring 20. The AF driving shaft 16 which can be directly moved rearward by the lens mount can also be indirectly moved in the same direction by the lens mount through the first and second intermediate levers 18 and 19.

After the lens mount 103 is mounted onto the mounting ring 12, when the interchangeable lens 100 is rotated in one direction by a certain angle value, the mount locking member 13 comes into alignment with a locking hole 105 (Fig. 8) provided on the lens mount 103, so that the mount locking member 13 projects into the locking hole 105 with the help of the compression spring 17. Thus, the lens mount is locked on the mounting ring. At the same time, the AF driving shaft 16 projects from the mounting ring 12 with the help of the compression spring 20, since the movement of the mount locking member 13 into the locking hole 105 of the lens mount 103 causes the first and second intermediate levers 18 and 19 to rotate about the respective shafts 18c and 19c. Namely, the force of the bent end 19b which forces the AF driving shaft 16 rearward against the compression spring 20 is released by the rotation of the second intermediate lever 19 about the shaft 19c in the clockwise direction, and accordingly the AF driving shaft 16 is moved forward by the spring 20. When the AF driving shaft 16 projects from the mounting ring, the projection 16d of the AF driving shaft 16 comes into engagement with a connecting member 110 (Fig. 4) provided on an automatic focusing device of the interchangeable lens, through a hole 107 formed in the lens mount 103, so that an automatic focusing mechanism can be completed. In case of an interchangeable lens which does not have an automatic focusing device, the projection 16d comes into abutment with the surface of the lens mount.

When the interchangeable lens is dismounted from the mounting ring, the mount lock releasing member 15 is pushed in a direction designated by an arrow B in Fig. 3, so that the mount locking member 13, integral with the mount lock releasing member 15, is pushed into the mounting ring 12 and, consequently, the lock is released. At the same time, the AF driving shaft 16 moves in the direction A in Fig. 3, since the first and second intermediate levers 18 and 19 rotate about the respective shafts 18c and 19c in the same rotational directions as those caused when the lens mount is mounted onto the mounting ring. As a result of this movement of the AF driving shaft 16, the projection 16d of the AF driving shaft 16 is retracted from the mounting ring 12. Namely, the projection 16d is disengaged from the lens mount. This permits the interchangeable lens to rotate by a certain angle value in a direction opposite to the direction caused when the interchangeable lens is mounted to the mounting ring in order to dismount the interchangeable lens from the camera body 11. As soon as the interchangeable lens is dismounted from the camera body, the mount locking member 13 and the AF driving shaft 16 project from the mounting ring surface 99 with the compression springs 17 and 20, respectively, so that they are returned to their respective initial positions.

Figs. 5 to 7 show a second embodiment of the present invention. In Figs. 5 to 7, the displacement of the bent end 19b of the second intermediate lever 19 is larger than a minimum value necessary for separating the projection 16d of the AF driving shaft 16 from the body mounting ring 12, so that the difference in displacement between the bent end 19b and the AF driving shaft 16 is absorbed by a third intermediate lever 30 with a spring member, provided between the second intermediate lever 19 and the AF driving shaft 16. Another feature of the second embodiment shown in Figs. 5 to 7 is the provision of the mode selection switch 40 in the fourth quadrant of the surface of the mounting ring. The mode selection switch 40 is kinematically connected to the third intermediate lever 30. Apart from the foregoing, the embodiment shown in Figs. 5 to 7 is basically identical to the first embodiment mentioned before. Accordingly, the elements shown in Figs. 5 to 7, corresponding to those in the first embodiment shown in Figs. 1 to 4, are designated by the same reference numerals. It should be noted that the elements in the second embodiment slightly differ in shape from those in the first embodiment, but there is no substantial difference in function therebetween.

The mode selection switch 40 is slidably supported up and down in Fig. 5 in the camera body. The mode selection switch 40 can occupy three positions, i.e. manual focusing mode position, releasing priority mode position, and focusing priority mode position which are positioned in this order from above. The mode selection switch 40 can be selectively clicked and held at these three positions by a click spring 41. Namely, the mode selection switch 40 has a connecting shaft 42, projecting therefrom, which has a smaller diameter portion 43 which is in turn inserted in a longitudinal groove 44 of the click spring 41. The longitudinal groove 44 has three enlarged click portions 45. When the smaller diameter portion 43 of the connecting shaft 42 is resiliently forced in one of the click portions 45, it is clicked.

Above the mode selection switch 40 an upper stop 46 is provided which limits the upward movement of the mode selection switch 40 in order to prevent the latter from accidentally moving to the manual focusing mode position. The upper stop 46 is movable in a direction C perpendicular to the longitudinal axial direction D of the mode selection switch 40 and continuously biased in a direction opposite to the direction C by a compression spring 47 to a projected position in which the upper end of the mode selection switch 40 bears against a stop surface 48 of the upper stop 46. When the upper stop 46 is pushed in the direction C against the compression spring 47, the stop surface 48 of the stop 46 is off an extension of the longitudinal axial direction D of the mode selection switch 40, so that the mode selection switch 40 can move upward, since the upper stop 46 no longer interferes with the upward movement of the mode selection switch. The upper stop 46 is moved to a non-operative position in which it does not interfere with the movement of the mode selection switch 40 unless the latter is brought to the manual focusing mode position positioned uppermost. The connecting shaft 42 is connected to a slide switching member 50 which has electrical contacts 51 secured thereto. The slide switching member 50 changes the electrical connection between the electrical contacts 51 and corresponding electrical contacts 89 which are, for example, shown in Fig. 5 connected to a central processing unit (CPU) in the camera body, in accordance with the displacement of the mode selection switch 40 in the longitudinal axial direction D. That is, data of mode of the mode selection switch 40 are input into the CPU.

In the embodiment shown in Figs. 5 to 7, the mount locking member 13 and the mount lock releasing member 15 are arranged in the third quadrant of the camera body, and the AF driving shaft 16 and the mode selection switch 40 are arranged in the fourth quadrant. The association between the mount lock releasing member 15 and the AF driving shaft 16 and between the mode selection switch 40 (slide switching member 50) and the AF driving shaft 16 is as follows.

The first intermediate lever 18 is provided on the side of the mount lock releasing member 15. The first intermediate lever 18 has an end arm 18a which is associated with an bent arm 15a of the mount lock releasing member 15 at the upper end of the first intermediate lever 18, so that when the mount lock releasing member 15 is pushed in the direction B in Fig. 5 against the spring 17, the first intermediate lever 18 rotates about the pivot shaft 18c. The lower arm 18b of the first intermediate lever 18 is associated with the second intermediate lever 19 which is located at the bottom of the camera body and which can rotate about the vertical pivot shaft 19c, at one end 19a of the second intermediate lever 19. The second intermediate lever 19 is connected at its opposite end 19b to the AF driving shaft 16 through the third intermediate member 30.

The third intermediate member 30 is connected to the AF driving shaft 16 so as not to move in the axial direction of the AF driving shaft 16. That is, the third intermediate lever 30 is held between and by a flange 16e formed on the AF driving shaft 16 and a snap ring 16f connected to the AF driving shaft.

The third intermediate lever 30 has a leaf spring 31 which extends on one side of the end 19b of the second intermediate lever 19. The lower end of the leaf spring 31 is rotatably connected to the end arm 19b of the second intermediate lever 19 by means of a pin 32. The end arm 19b has a reinforcing bent plate 19d, integral therewith, which extends along the rear face of the leaf spring 31.

The leaf spring 31 normally comes into close surface contact with the reinforcing plate 19d and enables the AF driving shaft 16 to move rearward against the compression spring 20 when the second intermediate lever 19 rotates about the shaft 19c, so that the end arm 19b thereof moves to move the AF driving shaft 16 rearward (direction A in Fig. 5). The displacement S1 of the end arm 19b of the second intermediate lever 19, namely, the angular displacement of the second intermediate lever 19 when the mount lock releasing member 15 is pushed in the direction B is larger than a minimum value S2 necessary for moving the AF driving shaft 16 from the projected position to the retracted position in which the driving shaft 16 is retracted from the mount surface 99 of the mounting ring 12 (see Fig. 7). The difference (S1-S2) can be absorbed by the leaf spring 31. Namely, the leaf spring 31 moves rearward together with the AF driving shaft 16 until the latter comes to the fully retracted position, and elastically deforms when the end arm 19b further moves in the same direction, to absorb the further movement of the second intermediate lever 19.

The third intermediate lever 30 has a bent end arm 33 which can be engaged by an inclined surface 52 of the slide switching member 50. The inclined surface 52 comes into engagement with the end arm 33 of the third intermediate lever 30, when the mode selection switch 40 is in the manual focusing mode position, to push the third intermediate lever 30 against the compression spring 20, in order to retract the AF driving shaft 16 from the mounting ring 12.

In Fig. 5, the mode selection switch 40 occupies the focusing priority mode position. In this position, the inclined surface 52 of the slide switching member 50, connected to the mode selection switch 40, is apart from the end arm 33 of the third intermediate lever 30, and accordingly, the AF driving shaft 16 projects from the mounting ring surface 99 with the help of the compression spring 20, so that the projection 16d can be engaged by the focus actuating member (not shown) of the interchangeable lens. Similarly, the mount locking member 13 projects from the mounting ring surface with the help of the compression spring 17 to lock the two mounts.

In this state, when the lens mount is mounted to the mounting ring 12 to mount the interchangeable lens onto the camera body, the mount locking member 13 is pushed by the surface of the lens mount 103 of the interchangeable lens 100, so that the mount locking member is forced into the mounting ring 99. The front end of the mount locking member 13 is flush with the surface 99 of the mounting ring 12. As a result of this, the mount lock releasing member 15, integral with the mount locking member 13, is also pushed, so that the first intermediate lever 18 rotates about the shaft 18c and the second intermediate lever 19 rotates in the counterclockwise direction in Fig. 5 about the shaft 19c. Then, the AF driving shaft 16 is forced into the mounting ring 12 against the compression spring 20 by the third intermediate lever 30 which has the leaf spring 31 connected to the end arm 19b. As can be seen from the foregoing, since the displacement S1 of the end arm 19b is larger than the minimum value S2 necessary for retracting the AF driving shaft 16 from the mounting ring 12, the leaf spring 31 deforms to absorb the further displacement of the end arm 19b after the AF driving shaft 16 reaches the fully retracted position. Accordingly, no adjustment of the stroke of the end arm 19d, i.e. of the second intermediate lever 19 is necessary.

After that, the interchangeable lens is rotated by a certain angle value to bring the mount locking member 13 into the corresponding locking hole 105 formed in the interchangeable lens, so that the interchangeable lens is locked in a predetermined position. When the mount locking member 13 is locked, since the force by which the compression spring 20 is compressed is released, the AF driving shaft 16 projects from the mounting ring 12, so that it can be engaged by the focus actuating member 110 (Fig. 7) of the interchangeable lens.

When the interchangeable lens is dismounted from the camera body, the mount locking member 15 is pushed in the direction B against the compression spring 17. Since the mount locking member 13 is integral with the mount lock releasing member 13, the AF driving shaft 16 and the mount locking member 13 are forced into the mounting ring, similarly to the case where they are pushed by the lens mount of the interchangeable lens. After that, the interchangeable lens can be rotated in the reverse direction by a certain value of angle to dismount is from the camera body. The same is true when the mode selection switch 40 is positioned in the releasing priority mode, i.e. in the lowermost position.

In Fig. 6 which shows a manual focusing mode, the upper stop 46 is pushed in the direction C against the compression spring 47, so that the upper stop no longer interferes with the movement of the mode selection switch 40. After that, the mode selection switch 40 is moved upward (in the direction D) in Fig. 6. The upward movement of the mode selection switch 40 causes the slide switching member 50 integral therewith to move in the same direction, so that the inclined surface 52 of the slide switching member 50 moves the third intermediate lever 30 rearward in the direction A through the end arm 33 of the third intermediate lever 30. As a result of the rearward movement of the third intermediate lever 30, the AF driving shaft 16, which is connected thereto through the flange 16e, is moved in the same direction against the compression spring 20, so that the AF driving shaft 16 is retracted from the mounting ring 12. Thus, the kinematic connection between the focusing mechanism on the camera body and the focusing mechanism on the interchangeable lens is broken, so that when the distance ring 109 (Fig. 8) is manually rotated, the driving mechanism on the AF driving shaft 16 can not be a resistance to the movement, resulting in a smooth manual focusing operation.

It goes without saying that the electrical contacts 51 are disconnected from the driving motor 26 in the manual focusing mode, so that the driving motor 26 does not work.

In the manual focusing mode, the second intermediate lever 19 rotates in accordance with the displacement of the third intermediate lever 30. However, the direction of the rotation of the second intermediate lever 19 is such that the end arm 19a comes far from the end arm 18b of the first intermediate lever 18, and accordingly the rotation of the second intermediate lever 19 does not have any influence on the locking operation by the mount locking member 13 and the lock releasing operation by the mount lock releasing member 15.

When the mode selection switch 40 is moved downward in the direction E in Fig. 6, it is brought to the automatic focusing mode position from the manual focusing mode position. When the mode selection switch is moved downward, the inclined surface 52 of the slide switching member 50 separates from the end arm 33 of the third intermediate lever 30, as shown in Fig. 5, so that the AF driving shaft 16 projects from the mounting ring 12 due to the spring 20. This results in an engagement of the projection 16d of the AF driving shaft 16 with the focus actuating member of the interchangeable lens. That is, the automatic focusing mode is established.

The above explanation has been directed to an interchangeable lens type of camera having an automatic focusing device. It can be easily understood that the present invention is also applicable to a different type of camera, for example, an interchangeable lens type of camera having a powered zooming device or a diaphragm driving device by connecting the AF driving shaft 16 to an adjusting member of focal length (not shown) of the interchangeable lens, or an adjusting member of diaphragm value (F value) of the interchangeable lens.

The apparatus for kinematic linkage in an interchangeable lens type camera according to the present invention can be widely applied to an interchangeable lens type camera having an automatic focusing device, a powered zooming device, or an automatic diaphragm adjusting device, which are driven by a driving motor provided on the camera body.

## Claims

1. An interchangeable lens type camera having a driving motor (26) for an interchangeable lens (100) inside the camera body (11) and having a mount locking member (13) on a mounting ring (12) of the camera body (11) for locking the interchangeable lens (100) in a predetermined position; a driving shaft (16) on the mounting ring for transmitting the rotation of the driving motor (26) in the camera body (11) to a driven member of the interchangeable lens (100); biasing means (17, 20) for biasing the driving shaft (16) and the mount locking member (13) in a direction in which they project from the surface (99) of the mounting ring (12); and a mount lock releasing member (15) for retracting the driving shaft (16) and the mount locking member (13) from the mounting ring surface against the biasing means (17, 20); said mount locking member (13) being integral with the mount lock releasing member (15); said camera having a mode selection switch (40) in the fourth, lower right quadrant of the mounting ring (12) when viewed from the front of the camera body (11) to select an automatic focusing mode in which the driving shaft (16) is engaged with the interchangeable lens (100), or a manual focusing mode in which said driving shaft (16) is disengaged from the interchangeable lens (100), **characterized** by a first intermediate lever (18) located in the third, lower left quadrant and rotatable about a horizontal pivot shaft (18c) upon movement of the mount lock releasing member (15), and a second intermediate lever (19) rotatable about a vertical pivot shaft (19c) located inside the camera body (11) on its horizontal bottom side and coacting with the rotational movement of the first intermediate lever (18) for kinematically linking the driving shaft (16) and the mount lock releasing member (15) and wherein said mount locking member (13) and the mount lock releasing member (15) are located in the third and said driving shaft (16) is located in the fourth quadrant of the mounting ring (12), the quadrants being formed by horizontal and vertical reference lines.

2. A camera according to claim 1, wherein said driving shaft (16) has a pair of flanges (16a, 16b) in which one end of the second intermediate lever (19) is inserted and held to establish a kinematic linkage between the driving shaft (16) and the second intermediate lever (19).

3. A camera according to claim 1 or 2, further comprising a third intermediate lever (30) with an elastically deformable member (31), between the the driving shaft (16) and the second intermediate lever (19).

4. A camera according to claim 3, wherein said second intermediate lever (19) is capable of rotating about the vertical pivot shaft (19c) through an angular displacement which is larger than a minimum value necessary for fully retracting the driving shaft (16) from the mounting ring surface, and wherein the difference in displacement between the driving shaft (16) and the second intermediate lever (19) is absorbed by the elastically deformable member (31).

5. A camera according to claim 3 or 4, further comprising means (18b, 19a) for transmitting the movement between the first intermediate lever (18) and the second intermediate lever (19) only in one direction, so that when the first intermediate lever (18) rotates in association with the actuation of the mount lock releasing member (15), the second intermediate lever (19) rotates in association with the rotation of the first intermediate lever (18), and when the second intermediate lever (19) rotates in association with the movement of the driving shaft (16), the first intermediate lever (18) does not rotate.

6. A camera according to any one of claims 3 to 5, wherein electrical contacts (14) are provided on the mounting ring (12) in the third quadrant between the mount locking member (13) and the driving shaft (16) to transmit and receive information between the camera body (11) and the interchangeable lens (100).

7. A camera according to any one of claims 3 to 6, wherein said driven member of the interchangeable lens (100) to be driven by the driving motor (26) is a focus adjusting member.

8. A camera according to any one of claims 3 to 7, wherein said driven member of the interchangeable lens (100) to be driven by the driving motor (26) is a focal length adjusting member (110).

9. A camera according to any one of claims 3 to 8, wherein said driven member of the interchangeable lens (100) to be driven by the driving motor (26) is a diaphragm adjusting member.

## Patentansprüche

1. Kamera mit Wechselobjektiv mit einem Antriebsmotor (26) für ein Wechselobjektiv (100) innerhalb des Kameragehäuses (11), mit einem Riegelelement (13) auf einem Befestigungsring (12) des Kameragehäuses (11) zum Verriegeln des Wechselobjektivs (100) in einer vorbestimmten Position; mit einer Antriebswelle (16) an dem Befestigungsring zum Übertragen der Drehung des Antriebsmotors (26) in dem Kameragehäuse (11) auf ein angetriebenes Element des Wechselobjektivs (10); mit Vorspannmitteln (17, 20) zum Vorspannen der Antriebswelle (16) und des Riegelelements (13) in einer Richtung, in der sie von der Oberfläche (99) des Befestigungsrings (12) abstehen; und mit einem Verriegelungs-Freigabeelement (15) zum Zurückziehen der Antriebswelle (16) und des Riegelelements (13) von der Oberfläche des Befestigungsrings gegen die Vorspannmittel (17, 20); wobei das Riegelelement (13) einstückig mit dem Verriegelungs-Freigabeelement (15) ausgeführt ist; die Kamera einen Betriebsartwahlschalter (40) im vierten, unteren rechten Quadranten des Befestigungsrings (12), betrachtet von der Frontseite des Kameragehäuses (11) aus hat, um eine automatische Scharfeinstellung zu wählen, in der die Antriebswelle (16) mit dem Wechselobjektiv (100) in Eingriff steht, oder um eine manuelle Scharfeinstellung zu wählen, in der die Antriebswelle (16) außer Eingriff mit dem Wechselobjektiv (100) ist, **gekennzeichnet** durch einen ersten Zwischenhebel (18) im dritten, unteren linken Quadranten, der um eine horizontale Schwenkachse (18c) bei Bewegung des Verriegelungs-Freigabeelements (15) drehbar ist, und durch einen zweiten Zwischenhebel (19), der um eine vertikale Schwenkachse (19c) innerhalb des Kameragehäuses (11) an dessen horizontaler Bodenseite drehbar ist und gemeinsam mit der Drehbewegung des ersten Zwischenhebels (18) die Antriebswelle (16) mit dem Verriegelungs-Freigabeelement (15) kinematisch koppelt, und wobei das Riegelelement (13) und das Verriegelungs-Freigabeelement (15) im dritten und die Antriebswelle (16) im vierten Quadranten des Befestigungsrings (12) angeordnet sind und die Quadranten durch eine horizontale und eine vertikale Bezugslinie gebildet sind.

2. Kamera nach Anspruch 1, bei der die Antriebswelle (16) zwei Flansche (16a, 16b) hat, zwischen denen ein Ende des zweiten Zwischenhebels (19) eingesetzt und gehalten ist, um eine kinematische Kopplung zwischen der Antriebswelle (16) und dem zweiten Zwischenhebel (19) zu erzeugen.

3. Kamera nach Anspruch 1 oder 2, ferner enthaltend einen dritten Zwischenhebel (30) mit einem elastisch verformbaren Element (31) zwischen der Antriebswelle (16) und dem zweiten Zwischenhebel (19).

4. Kamera nach Anspruch 3, bei der der zweite Zwischenhebel (19) um die vertikale Schwenkachse (19c) über einen Winkel drehbar ist, der größer als ein zum vollen Zurückziehen der Antriebswelle (16) von der Oberfläche des Befestigungsrings erforderlicher Minimalwinkel ist, und bei der der Unterschied der Verstellung der Antriebswelle und des zweiten Zwischenhebels (19) durch das elastisch verformbare Element (31) absorbiert wird.

5. Kamera nach Anspruch 3 oder 4, ferner enthaltend Mittel (18b, 19a) zum Übertragen der Bewegung zwischen dem ersten Zwischenhebel (18) und dem zweiten Zwischenhebel (19) nur in einer Richtung, so daß beim Drehen des ersten Zwischenhebels (18) mit der Betätigung des Verriegelungs-Freigabeelements (15) der zweite Zwischenhebel (19) mit der Drehung des ersten Zwischenhebels (18) gedreht wird, und beim Drehen des zweiten Zwischenhebels (19) mit der Bewegung der Antriebswelle (16) der erste Zwischenhebel (18) stillsteht.

6. Kamera nach einem der Ansprüche 3 bis 5, bei der elektrische Kontakte (14) auf dem Befestigungsring (12) im dritten Quadranten zwischen dem Riegelelement (13) und der Antriebswelle (16) vorgesehen sind, um Informationen zwischen dem Kameragehäuse (11) und dem Wechselobjektiv (100) zu senden und zu empfangen.

7. Kamera nach einem der Ansprüche 3 bis 6, bei der das angetriebene Element des Wechselobjektivs (100), das durch den Antriebsmotor (26) anzutreiben ist, ein Scharfeinstellelement ist.

8. Kamera nach einem der Ansprüche 3 bis 7, bei der das angetriebene Element des Wechselobjektivs (100), das durch den Antriebsmotor (26) anzutreiben ist, ein Brennweiteneinstellelement (110) ist.

9. Kamera nach einem der Ansprüche 3 bis 8, bei der das angetriebene Element des Wechselobjektivs (100), das durch den Antriebsmotor (26) anzutreiben ist, ein Blendeneinstellelement ist.

## Revendications

1. Appareil photo du type à objectif interchangeable comportant un moteur d'entraînement (26) pour un objectif interchangeable (100) à l'intérieur d'un corps d'appareil photo (11) et ayant un élément de verrouillage de monture (13) sur un anneau de monture (12) du corps d'appareil photo (11) pour verrouiller l'objectif interchangeable (100) dans une position prédéterminée : un arbre d'entraînement (16) sur l'anneau de monture pour transmettre la rotation du moteur d'entraînement (26) dans le corps d'appareil photo (11) à un élément entraîné de l'objectif interchangeable (100) ; un moyen de rappel (17, 20) pour rappeler l'arbre d'entraînement (16) et l'élément de verrouillage de monture (13) dans un sens dans lequel ils dépassent de la surface (99) de l'anneau de monture (12) ; et un élément de déverrouillage de monture (15) pour rétracter l'arbre d'entraînement (16) et l'élément de verrouillage de monture (13) par rapport à la surface de l'anneau de monture contre le moyen de rappel (17, 20) ; ledit élément de verrouillage de monture (13) étant d'un seul tenant avec l'élément de déverrouillage de monture (15) ; ledit appareil photo possédant un contacteur de sélection de mode (40) dans le quatrième quadrant, inférieur droit, de l'anneau de monture (12), tel qu'il est vu à partir de l'avant du corps d'appareil photo (11), pour sélectionner un mode de mise au point automatique dans lequel l'arbre d'entraînement (16) est en prise avec l'objectif interchangeable (100), ou un mode de mise au point manuel dans lequel ledit arbre d'entraînement (16) est débrayé de l'objectif interchangeable (100), caractérisé par un premier levier intermédiaire (18) situé dans le troisième quadrant, inférieur gauche, et pouvant tourner autour d'un axe de pivotement horizontal (18c) lors du déplacement de l'élément de déverrouillage de monture (15), et un deuxième levier intermédiaire (19) pouvant tourner autour d'un axe de pivotement vertical (19c) situé à l'intérieur du corps d'appareil photo (11), de son côté inférieur horizontal, et coopérant avec le déplacement en rotation du premier levier intermédiaire (18) pour relier de façon cinématique l'arbre d'entraînement (16) et l'élément de déverrouillage de monture (15) et dans lequel ledit élément de verrouillage (13) et l'élément de déverrouillage de monture (15) sont situés dans le troisième quadrant et ledit arbre d'entraînement (16) est situé dans le quatrième quadrant de l'anneau de monture (12), les quadrants étant formés par des lignes de référence horizontales et verticales.

2. Appareil photo selon la revendication 1, dans lequel ledit arbre d'entraînement (16) possède une paire de collerettes (16a, 16b) entre lesquelles une extrémité du deuxième levier intermédiaire (19) est introduite et maintenue pour constituer une liaison cinématique entre l'arbre d'entraînement (16) et le deuxième levier intermédiaire (19).

3. Appareil photo selon la revendication 1 ou 2, comprenant de plus un troisième levier intermédiaire (30) avec un élément déformable de façon élastique (31), entre l'arbre d'entraînement (16) et le deuxième levier intermédiaire (19).

4. Appareil photo selon la revendication 3, dans lequel ledit deuxième levier intermédiaire (19) peut tourner autour de l'axe de pivotement vertical (19c) sur un déplacement angulaire qui est plus grand qu'une valeur minimale nécessaire pour rétracter complètement l'arbre d'entraînement (16) par rapport à la surface de l'anneau de monture, et dans lequel la différence de déplacement entre l'arbre d'entraînement (16) et le deuxième levier intermédiaire (19) est absorbée par l'élément déformable de façon élastique (31).

5. Appareil photo selon la revendication 3 ou 4, comprenant de plus un moyen (18b, 19a) pour transmettre le déplacement entre le premier levier intermédiaire (18) et le deuxième levier intermédiaire (19) seulement dans un sens, de sorte que lorsque le premier levier intermédiaire (18) tourne en association avec la manoeuvre de l'élément de déverrouillage de monture (15), le deuxième levier intermédiaire (19) tourne en association avec la rotation du premier levier intermédiaire (18), et lorsque le deuxième levier intermédiaire (19) tourne en association avec le déplacement de l'arbre d'entraînement (16), le premier levier intermédiaire (18) ne tourne pas.

6. Appareil photo selon l'une quelconque des revendications 3 à 5, dans lequel des contacts électriques (14) sont disposées sur l'anneau de monture (12) dans le troisième quadrant entre l'élément de verrouillage de monture (13) et l'arbre d'entraînement (16) pour émettre et recevoir de l'information entre le corps d'appareil photo (11) et l'objectif interchangeable (100).

7. Appareil photo selon l'une quelconque des revendications 3 à 6, dans lequel ledit élément d'entraînement de l'objectif interchangeable (100) destiné à être entraîné par le moteur d'entraînement (26) est un élément de réglage de mise au point.

8. Appareil photo selon l'une quelconque des revendications 3 à 7, dans lequel ledit élément d'entraînement de l'objectif interchangeable (100) destiné à être entraîné par le moteur d'entraînement (26) est un élément de réglage de distance focale (110).

9. Appareil photo selon l'une quelconque des revendications 3 à 8, dans lequel ledit élément d'entraînement de l'objectif interchangeable (100) destiné à être entraîné par le moteur d'entraînement (26) est un élément de réglage de diaphragme.
